(19)

Europäisches
Patentamt
European
Patent Office
Office européen
des brevets

(11)  **EP 4 528 952 A1**

(12)  **EUROPEAN PATENT APPLICATION**
published in accordance with Art. 153(4) EPC

(43) Date of publication:
26.03.2025 Bulletin 2025/13

(21) Application number: 22942480.9

(22) Date of filing: 06.12.2022

(51) International Patent Classification (IPC):
H02G 15/08 (2006.01)    H02G 1/16 (2006.01)

(86) International application number:
PCT/CN2022/136800

(87) International publication number:
WO 2023/221460 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.05.2022 CN 202210545330

(71) Applicant: Electric Power Research Institute.
China Southern Power Grid
Guangzhou, Guangdong 510663 (CN)

(72) Inventors:
• HOU, Shuai
Guangzhou, Guangdong 510663 (CN)
• FU, Mingli
Guangzhou, Guangdong 510663 (CN)
• LI, Xiaolin
Guangzhou, Guangdong 510663 (CN)
• FAN, Lingmeng
Guangzhou, Guangdong 510663 (CN)
• JIA, Lei
Guangzhou, Guangdong 510663 (CN)
• ZHU, Wenbo
Guangzhou, Guangdong 510663 (CN)
• HUI, Baojun
Guangzhou, Guangdong 510663 (CN)
• ZHAN, Yunpeng
Guangzhou, Guangdong 510663 (CN)
• FENG, Bin
Guangzhou, Guangdong 510663 (CN)
• ZHANG, Yifan
Guangzhou, Guangdong 510663 (CN)

(74) Representative: Hoffmann Eitle
Patent- und Rechtsanwälte PartmbB
Arabellastraße 30
81925 München (DE)

(54)  **LIQUID PHASE IMPREGNATION-BASED REINFORCEMENT METHOD AND DEVICE FOR REPAIR INTERFACE OF FLEXIBLE JOINT OF HIGH-VOLTAGE CABLE**

(57) The present application relates to a liquid phase impregnation-based reinforcement method and device for a repair interface of a flexible joint of a high-voltage cable. The method comprises the following steps: step 1, forming a surface of a reversed stress cone; step 2, wrapping the surface of the reversed stress cone with dust-free cloth, heating the outer side of the dust-free cloth, and treating the surface of the reversed stress cone using a liquid-phase impregnation method; step 3, pre-heating a joint, subjecting an insulation-repaired cross-linked polyethylene material to extrusion molding or lapping, and cross-linking repaired insulation in a preset temperature range and a preset pressure range; and step 4, polishing the surface of the repaired insulation, manufacturing a stress cone, and repairing an outer shielding layer.

a surface of a reaction stress cone is formed

↓

the surface of the reaction stress cone is wrapped with a dust-free wiper, an outside of the dust-free wiper is heated, and the surface of the reaction stress cone is processed with a liquid phase impregnation method

↓

the joint is preheated, the cross-linked polyethylene repairing insulation material is extruded or wrapped, and the repairing insulation material is cross-linked in a preset temperature range and a preset pressure range

↓

a surface of the repairing insulation material is polished to manufacture the stress cone, and an outer shielding layer is repaired

FIG. 8

EP 4 528 952 A1

Description

CROSS REFERENCES TO RELATED APPLICATION

The present application claims priority to Chinese patent application No. 202210545330.3, titled "Liquid Phase Impregnation-Based Reinforcement Method and Device for Repair Interface of Flexible Joint off High-Voltage Cable", and filed on May 19, 2022, the content of which is hereby incorporated by reference in its entirety.

TECHNICAL FIELD

The present invention relates to the field of high-voltage cables, and particularly to a liquid phase impregnation-based reinforcement method and device for a repair interface of a flexible joint of a high-voltage cable.

BACKGROUND

The high-voltage cross-linked polyethylene insulated power cable is an important infrastructure for electric power transmission, especially for the electric power transmission across a large area of sea. Since the overhead lines cannot be laid, the use of the high-voltage cross-linked polyethylene insulated submarine cable becomes an inevitable choice. For the high-voltage cross-linked polyethylene submarine cable, a continuous length is one of the basic requirements. Since the manufacturing length of a single cable is limited, the requirement for laying of submarine cables is that the prefabricated cable intermediate joints are not used as much as possible. In order to achieve a sufficient transmission distance, Single-segment cables need to be connected to reach the required length through the flexible joints, such flexible joint is also referred to as a factory flexible joint. In addition, faults are inevitable during the transportation, laying, and operation of a large-length submarine cable. Therefore, manufacturing of the flexible joints is an important means for repairing the faults. Such a flexible joint is also referred to as a repair flexible joint. The structure and working principle of the factory flexible joint are substantially the same as the repair flexible joint. There are only slight differences in the manufacturing process due to different construction conditions.

The structural size of the flexible joint is the same as the cable body or slightly larger than the cable body by a few millimeters, in order to ensure that the flexible joint and the cable are armored together to form a cable. Accordingly, the flexible joint is required to be capable of withstanding various mechanical stresses as the cable, such as tension, torsion, bending, extrusion, etc. Therefore, the structure and performance of the flexible joint should be similar to that of the cable body. However, the manufacturing of the flexible joint is technically extremely difficult. Under the restriction of the limited insulation thickness and the destroyed integrity and consistency of the cable body insulation, it is difficult to implement a reliable long-term working performance. Even experienced cable manufacturers cannot fully guarantee the successful manufacturing of the flexible joints. Generally, the high-voltage submarine cable flexible joints need to be manufactured several times or even a dozen times before a product can barely pass the type test.

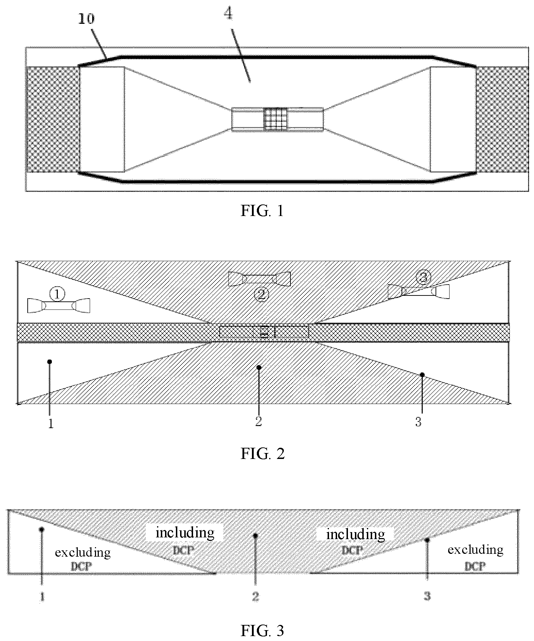

The basic structure of the flexible joint is shown in FIG. 1. It is recognized that the most difficult and critical part is the process of "extrusion or wrapping of the cross-linked polyethylene material to high temperature and high pressure insulation vulcanization". How to repair the cross-linked polyethylene (XLPE) insulating layer 2 after the inner shielding is completed is a key to the success of the entire flexible joint. There are two methods in the conventional technology: the first method is to use a special insulation mold to extrude the insulation material, pressurize the insulation material in a vulcanization tube, and vulcanize the insulation material at high a temperature, in order to ensure that the injection molded XLPE cable material and the cable body are fused together. The specific operation steps are as follows, including positions where the conductor joint and conductor shielding joint are completed are cleaned, then placed in the insulation molding mold, and preheated to 105°C; the XLPE cable material is extruded by an extruder into the insulation molding mold, the extrusion is stopped when the cable material overflows at both ends of the molding mold, and then the cable joint is cooled to the room temperature. The molding mold is removed and replaced with a vulcanization tube, in which the air is exhausted and the nitrogen is injected. The cable joint is vulcanized at 200°C and 1.2MPa to complete the insulating layer joint. The second method is to manufacture the XLPE cable material into a certain specification of film tape, and the nuclear radiation technology is utilized to process the film tape in advance to make a "semi- vulcanized irradiation cross-linked tape" for later use. When the joint is manufactured, the welded wire core is wrapped around by the cross-linked tape layer by layer to a certain size, and then molded in the molding mold with 0.6 MPa air pressure and high-temperature vulcanization at about 160°C.

Disadvantages of the first method one are: in the process of extruding XLPE insulation, if the thickness of one extrusion is too large (15 to 30 mm), large pores may be produced in the later pressure, heating and vulcanization processes. This problem is still unresolved.

Disadvantages of the second method are: although the cross-linked tape wrapping layer by layer is vulcanized under pressure and high temperature, a small amount of gaps definitely exist between the layers; the manufactured semi-vulcanized cross-linked tape cannot avoid contaminating dust. The "tape wrap molding method" process technology has strict requirements on the joint manufacturing environment, temperature, and climate (whether it is rainy and humid). The manufacturing process is complicated, and requires extremely high quality of the process technology operator, and the technology is difficult to master. Therefore, it is difficult to achieve an excellent electrical performance index with the "tape wrap molding method" cross-linked cable joint technology.

In addition, no matter the first method or the second method, there is a common unresolved problem. The basic manufacturing principle of the flexible joint is to cut the cross-linked XLPE insulation of the cable body into a reaction stress cone in a "pencil tip" shape, and then the uncross-linked repair XLPE insulation is manufactured through extrusion or wrap molding, then the repairing insulation material is cross-linked to form the main insulation structure of the flexible joint. This leads to a problem, as shown in FIG. 3, there is a repair interface 3 between the injection molded or molded cross-linkable polyethylene repair insulation material and the cable body insulation 1. The cross-linking reaction of the cable body insulation is completed, and the cross-linking initiator (i.e., dicumyl peroxide (DCP)) inside the material is completely consumed. In this case, even if the repair insulation material is completely fused to the original body insulation, there may still exist an interface. Due to insufficient cross-linking agent content at the interface, the degree of cross-linking is lower, which results in a lower mechanical strength of the flexible joint at the repair interface, so that the original mechanical property of the cable body insulation cannot be achieved. In this case, the flexible joint is difficult to pass the type test. Even if the flexible joint passes the test accidentally, since the high-voltage submarine cable works under a strong water pressure for a long time, and the submarine cable is subjected to drag and bending stresses many times during the laying and installation process, if the cross-linking degree at the repair interface of the flexible joint is insufficient, repeated stress fatigue may cause stress defects of the insulation material at the repair interface, and may eventually lead to a failure of the flexible joint. The inventors have dissected the actual cable flexible joint and tested the tensile strength at different positions, and found that the tensile strength of a sample without the repair interface is much greater than that of the sample with the repair interface, which fully confirms that the insulation interface is regarded as an area in the insulation material of the flexible joint with the weakest mechanical property.

In view of the above, the conventional technology does not address the problem of insufficient mechanical strength at the repair insulation interface of the flexible joint of the high-voltage submarine cable. As a result, the mechanical property of the cable flexible joint is weaker, defects are prone to occur under the mechanical stress, the working stability of the cable flexible joint is weaker, and the joint manufacturing success rate is lower.

## SUMMARY

According to the embodiments of the present invention, a liquid phase impregnation-based reinforcement method for a repair interface of a flexible joint of a high-voltage cable is provided.

In the first aspect of the present application, a liquid phase impregnation-based reinforcement method for a repair interface of a flexible joint of a high-voltage cable is provided, including:

step 1, forming a surface of a reaction stress cone;
step 2, wrapping the surface of the reaction stress cone with a dust-free wiper, heating an outside of the dust-free wiper, and processing the surface of the reaction stress cone with a liquid phase impregnation method;
step 3, preheating the joint, extruding or wrapping a cross-linked polyethylene repairing insulation material, and cross-linking the repairing insulation material in a preset temperature range and a preset pressure range; and
step 4, polishing a surface of the repairing insulation material to manufacture the stress cone, and repairing an outer shielding layer.

In an embodiment, the step 2 further includes:

step 2.1, wrapping around surfaces of reaction stress cones on both sides of the flexible joint with a dust-free wiper tape;
step 2.2, wrapping around a surface of the wrapped dust-free wiper tape with a heating wire;
step 2.3, starting a heating function of the heating wire, measuring a temperature of the heating wire in real time, controlling a heating power of the heating wire to maintain the temperature of the heating wire in a set temperature range;
step 2.4, spraying liquid dicumyl peroxide (DCP) evenly on the dust-free wiper until the dust-free wiper is soaked;
step 2.5, measuring and adjusting a heating temperature in real time, a heating duration being less than one-third of a DCP half-life, to allow liquid DCP molecules to gradually impregnate and diffuse from the dust-free wiper into a cross-linked polyethylene (XLPE) material of the surface of the reaction stress cone;
step 2.6, removing the heating wire and the dust-free wiper; and
step 2.7, cleaning surface impurities of the reaction stress cone.

In an embodiment, in the step 2.1, a polyester fiber dust-free wiper is adopted to manufacture a wrapping tape material, a class of the dust-free wiper is class 100 or class 1000, a thickness of the dust-free wiper tape ranges from 0.2 to 2 mm, and a width of the dust-free wiper tape ranges from 20 to 50 mm.

In an embodiment, in the step 2.2, the heating wire is a silicone rubber heating wire having a white insulation or colorless insulation material.

In an embodiment, the step 2.3 further includes: measuring, by a non-contact temperature sensor, the temperature of the silicone rubber heating wire in real time, and controlling the heating power of the heating wire to maintain the temperature of the heating wire in a range of 70 to 90 °C.

In an embodiment, the step 2.5 further includes: controlling the temperature of the insulation layer to be maintained at 70 to 90°C for 30 to 60 minutes.

In an embodiment, the step 2.6 further includes: stopping the heating of the heating wire, removing the heating wire and the dust-free wiper in sequence after the temperature drops to a room temperature.

In an embodiment, the step 2.7 further includes: wiping and cleaning surface impurities of the reaction stress cone with the dust-free wiper soaked with alcohol, and blowing, by a high-pressure air gun, the surface of the reaction stress cone to remove the surface impurities and possible remaining debris of the dust-free wiper.

In an embodiment, the step 3 further includes: controlling a preheating temperature in a range of 100°C to 115°C, a maximum temperature at the surface of the reaction stress cone does not exceed 120°C.

In the second aspect of the present application, a liquid phase impregnation-based reinforcement device for a repair interface of a flexible joint of a high-voltage cable is provided, applied to implement the liquid phase impregnation-based reinforcement device for the repair interface of the flexible joint of the high-voltage cable according to the above embodiments, the device includes: an impregnation constant temperature heating device and a dust-free wiper tape; the impregnation constant temperature heating device includes a non-contact temperature sensor, a universal adjustable fixed flexible rod, a digital display electric heating thermostat controller, and a silicone rubber heating wire; a base of the fixed flexible rob is padded with a rubber and fixed on an outside of the cable; the non-contact temperature sensor and a wire thereof are fixed on the universal adjustable fixed flexible rod; the silicone rubber heating wire is connected to the digital display electric heating thermostat controller through the wire, the digital display electric heating thermostat controller is connected to a 220V power supply.

The details of one or more embodiments of the present invention are set forth with reference to the accompanying drawings and the description below. Other features, purposes and advantages of the present application will become obvious from the description, drawings and claims.

BRIEF DESCRIPTION OF THE DRAWINGS

In order to more clearly describe the technical solution in the embodiments of the present invention or the conventional technology, the accompanying drawings required for use in the description of the embodiments or the conventional technology will be briefly introduced below. Obviously, the drawings in the following description are merely some embodiments of the present invention. Those of ordinary skill in the art can obtain other drawings based on these disclosed accompanying drawings without any creative efforts.

FIG. 1 is a schematic diagram of a basic structure of a flexible joint of a high-voltage submarine cable according to some embodiments.

FIG. 2 is a schematic diagram of testing and sampling of an insulating layer of a flexible joint according to some embodiments.

FIG. 3 shows a DCP content state in an insulating layer of a flexible joint before cross-linking according to some embodiments.

FIG. 4 is a schematic diagram of a surface of a reaction stress cone to be processed according to some embodiments.

FIG. 5 is a schematic diagram illustrating steps of wrapping a dust-free wiper according to some embodiments.

FIG. 6 is a schematic diagram illustrating steps of winding a heating wire and spraying a Liquid DCP according to some embodiments.

FIG. 7 is a schematic diagram illustrating a liquid phase impregnation-based reinforcement device for a repair interface of a flexible joint of a high-voltage cable according to some embodiments.

FIG. 8 is a flow chart showing a liquid phase impregnation-based reinforcement method for a repair interface of a flexible joint of a high-voltage cable according to some embodiments.

DETAILED DESCRIPTION

The technical solution in the embodiments of the present invention will be clearly and completely described below with reference to the accompanying drawings in the embodiments of the present invention. Obviously, the described embodiments are only some embodiments of the present invention, but not all the embodiments. Based on the embodiments of the present invention, all other embodiments obtained by those of ordinary skill in the art without creative efforts shall fall within the protection scope of the present invention.

It should be noted that in terms of the operation process, the present invention has advantages of a simple operation process, a lightweight device, lower requirements on operation environment and construction situation, and is adapted to the manufacturing of both emergency repair flexible joint and factory flexible joint.

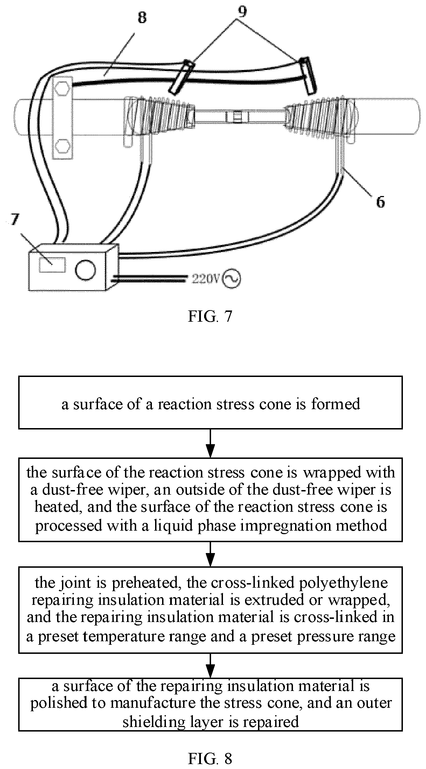

As shown in FIG. 8, in the embodiment I of the present invention, a liquid phase impregnation-based reinforcement method for a repair interface of a flexible joint of a high-voltage cable is provided, which includes the following steps.

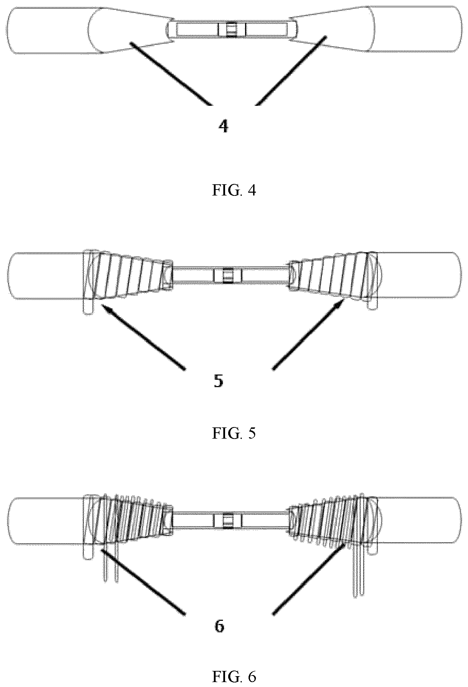

Step 1: a surface 4 of a reaction stress cone is formed, as shown in FIG. 4. In a preferred but non-limiting embodiment of the present invention, the step 1 may specifically include following steps.

Step 1.1: a reaction stress cone is roughly cut, and an inner shielding layer is removed.

Step 1.2: a copper conductor is welded.

Step 1.3: an inner semiconductive shielding layer is repaired.

Step 1.4: the reaction stress cone is finely cut, and the surface of the reaction stress cone is finely polished.

Step 2: the surface of the reaction stress cone is wrapped with a dust-free wiper, an outside of the dust-free wiper is heated, and the surface of the reaction stress cone is processed with a liquid phase impregnation method. In a preferred embodiment of the present invention, the step 2 may specifically include the following steps.

Step 2.1: a dust-free wiper tape 5 is adopted to wrap around surfaces of reaction stress cones on both sides of the flexible joint, as shown in FIG. 5.

In an embodiment, a polyester fiber dust-free wiper is adopted to manufacture the wrapping tape material. A class of the dust-free wiper is class 100 or class 1000. A thickness of the dust-free wiper tape ranges from 0.2 to 2 mm. A width of the dust-free wiper tape ranges from 20 to 50 mm.

In an embodiment, during the wrapping process, the number of wrapping layers of the wrapping tape is not limited, but a maximum wrapping thickness of the wrapping tape does not exceed a preset value, such as, but not limited to, 5 mm, and a minimum wrapping thickness of the wrapping tape is not less than a preset value, such as but not limited to 2 mm. Both ends of the wrapping tape are tied and fixed on the reaction stress cones by using high-temperature resistant nylon cable ties. An operating temperature of the nylon cable tie is usually not lower than 150°C, as shown in FIG. 5. It should be appreciated that the nylon cable tie is extremely convenient to bundle and disassemble, and has good temperature resistance. In another embodiment, a Polypropylene (PP) rope can be used instead of the nylon cable tie.

It should be noted that the reasonable width and wrapping thickness of the dust-free wiper are designed to ensure a simple and convenient operation process. Meanwhile, the surface density of the dust-free wiper is relatively large, so that in the following steps, the liquid dicumyl peroxide (DCP) may have better impregnation property after spraying, and can evenly and fully impregnate and diffuse into the cross-linked polyethylene material on the surface of the reaction stress cone.

Step 2.2: a heating wire is wrapped around a surface of the wrapped dust-free wiper tape. It should be noted that the use of class 1000 or class 100 dust-free wiper can avoid the residue of cloth material debris from the source.

In an embodiment, the heating wire is evenly wrapped around the surface of the wrapped dust-free wiper tape at preset intervals. For example, but not limited, the interval during the wrapping process of the heating wire may range from 1 to 3 mm.

In an embodiment, the heating wire is a silicone rubber heating wire 6. As shown in FIG. 6, the silicone rubber heating wire has a white insulation or colorless insulation material, and the maximum operating temperature is not lower than 250°C. It should be noted that the surface of the reaction stress cone is heated by winding the silicone rubber heating wire, which has advantages of a fast heating rate, a high operating temperature, a good portability, and a low cost. More importantly, the silicone rubber insulation material has good compatibility with the DCP at the high temperature in subsequent steps. The DCP does not affect the silicone rubber, and the silicone rubber does not cause chemical reactions in the DCP, thereby avoiding loss of DCP active molecules. Meanwhile, the heating is performed from the surface of the reaction stress cone, heat may be lost when transferred to the inside of the insulating layer. The high temperature is only retained on the surface of the reaction stress cone, which avoids excessive penetration depth of the DCP and prevents over-cross-linking of the insulation material of the cable body caused by the excessive DCP content.

Step 2.3: a heating function of the heating wire is started, and the temperature of the silicone rubber heating wire is measured in real time. A heating power of the heating wire is controlled to maintain the temperature of the heating wire in a set temperature range, as shown in FIG. 6.

In an embodiment, a non-contact temperature sensor is adopted to measure the temperature of the silicone rubber heating wire in real time, and the heating power of the heating wire is controlled to maintain the temperature of the heating wire in a range of 70 to 90 °C.

Step 2.4: the liquid DCP is sprayed evenly on the dust-free wiper until the dust-free wiper is soaked.

In an embodiment, the dicumyl peroxide is melted at 80° C and kept in a liquid state, and a maximum dose of spraying is determined when the liquid starts to drip from the dust-free wiper, as shown in FIG. 6.

Step 2.5: after the liquid DCP soaks the dust-free wiper, a heating duration is less than one-third of a DCP half-life, such that liquid DCP molecules gradually impregnate and diffuse from the dust-free wiper into the XLPE material of the surface of the reaction stress cone.

Specifically, according to the decomposition half-life of the DCP at different temperatures, the temperature of the heating wire is measured and adjusted in real time, and the temperature of the heating wire is controlled to maintain at the preset value and the heating duration is less than one-third of the DCP half-life, such that the liquid DCP molecules gradually impregnate and diffuse from the dust-free wiper to the XLPE on the surface of the reaction stress cone.

In an embodiment, the DCP decomposition half-life is defined as a duration required for a DCP concentration C in the cross-linkable material to drop to half of an initial concentration $C_0$ at a certain temperature T. The half-life of the DCP in the cross-linkable material at any temperature can be calculated by combining the cross-linking reaction rate constant ratio formula with the 1-min half-life of the DCP, a cross-linking reaction activation energy E and a gas constant R. The calculation formula is as follows:

$$\tau = \tau_0 e^{\frac{E}{R}\left(\frac{1}{T}-\frac{1}{T_0}\right)} \ .$$

In the above formula, $T_0$ represents the temperature corresponding to the 1-min half-life of the DCP, E = 36.4 kcal/mol, R = $1.98 \times 10^{-3}$ kcal/(mol·K). It is known that the decomposition half-life of the DCP at 173°C is 1 minute. The half-life of the DCP at different temperatures is calculated by the formula as shown in Table 1.

Table 1 half-life estimation results of DCP at different temperatures

| Temperature/°C | Half-life |
|---|---|
| 70 | 157 days |
| 80 | 35 days |
| 90 | 8.3 days |
| 100 | 51.6 hours |
| 110 | 14.3 hours |

In an embodiment, according to the calculation results in Table 1, the temperature of the insulating layer is controlled to be maintained at 70 to 90°C for 30 to 60 minutes. In this process, the liquid DCP molecules gradually impregnate and diffuse from the dust-free wiper into the XLPE of the surface of the reaction stress cone.

It should be noted that the temperature on the surface of the reaction stress cone is strictly controlled in the range of 70 to 90°C, which enhances the molecular movement of the cross-linked polyethylene material after being heated, meanwhile the temperature required for melting the DCP is maintained, so that the DCP is kept in a constant liquid state, and the liquid DCP molecules are facilitated to diffuse into and impregnate the cross-linked polyethylene material of the surface of the reaction stress cone. Meanwhile, at this temperature, the half-life of DCP decomposition is about 8 to 150 days. Even at a high temperature of 90°C, the half-life of DCP is 8 days. The temperature range designed in the present invention can not only ensure that the DCP is kept in the liquid state and rapidly impregnates and diffuses to a cross-linked polyethylene superficial layer of the reaction stress cone, but also ensure that the DCP may not decompose and be exhausted at this temperature.

Step 2.6: the heating of the heating wire is stopped, and the heating wire and the dust-free wiper are removed in sequence after the temperature drops to the room temperature. Both the silicone rubber heating wire and the dust-free wiper are disposable and cannot be reused.

Step 2.7: surface impurities of the reaction stress cone are cleaned.

In an embodiment, the dust-free wiper soaked with alcohol is utilized to gently wipe and clean the surface impurities of the reaction stress cone, and a high-pressure air gun is utilized to blow the surface of the reaction stress cone to remove the surface impurities and the possible remaining debris of the dust-free wiper. It should be noted that based on the dust-free wiper, the dust-free wiper soaked with alcohol is utilized to gently wipe and clean the surface impurities of the reaction stress cone, and the high-pressure air gun is utilized to blow the surface of the reaction stress cone, thereby avoiding the possibilities of large-sized impurities and defects in the insulation, and guaranteeing the electrical performance of the flexible joint.

Step 3: the joint is preheated, the cross-linked polyethylene repairing insulation material is extruded or wrapped, and the repairing insulation material is cross-linked in a preset temperature range and a preset pressure range.

Specifically, the preset temperature range may include a range of 135°C to 200°C. The preset pressure range may include a range of 0.5 MPa to 5 MPa.

In an embodiment, a preheating temperature is controlled in a range of 100°C to 115°C, and the maximum temperature at the surface of the reaction stress cone is strictly required not to exceed 120°C.

In an embodiment, the repair insulation material is completely the same as the material for manufacturing the insulation of the cable body, which can be either wrap molding or extrusion molding.

Step 4: a surface of the repairing insulation material is polished to manufacture the stress cone 10, and an outer shielding layer is repaired.

In order to describe the technical solution of the present invention more clearly and highlight a prominent substantive feature and a notable progress of the present invention compared to the conventional technology, the liquid phase impregnation-based reinforcement method for the repair interface of the flexible joint of the high-voltage cable will be illustrated below through specific embodiments and comparative examples.

Embodiment:

Repairing insulation of the flexible joint is trial-manufactured according to the specifications of 320kV DC submarine cable. In order to save the experimental period and cost, the processes of conductor welding and inner shielding repair are omitted. The 320kV cable is cut directly, the insulating outer shielding is cut off from the middle, the complete inner shielding and conductor wire core structure are retained, and the insulating layer is cut and polished into the shape of the reaction stress cone. The reaction stress cone is subjected to the surface impregnation treatment described in the present application, and the specific operations are as follows.

The wrapping tape is made of class-1000 polyester fiber dust-free wiper. The thickness of the dust-free wiper is 0.5 mm, and the width of the dust-free wiper tape is 50mm. The dust-free wiper tape is evenly wrapped around the surface of the reaction stress cone on both sides of the flexible joint, and during the wrapping process, the number of wrapping layers of the wrapping tape is equal to 3. The maximum wrapping thickness of the wrapping tape does not exceed 3 mm, and the minimum wrapping thickness of the wrapping tape is not less than 2 mm. Both ends of the wrapping tape are tied and fixed on the reaction stress cones by using nylon cable ties.

The silicone rubber heating wire is evenly wrapped around the surface of the wrapped dust-free wiper tape. The interval during the wrapping process of the heating wire is equal to 1 mm. The silicone rubber heating wire has white insulation material, and the maximum operating temperature is not lower than 250°C.

The heating function of the silicone rubber heating wire is started, a non-contact temperature sensor is utilized to measure the temperature of the silicone rubber heating wire in real time, a heating switch of the heating wire is controlled to be on and off intermittently, and the temperature of the heating wire is maintained at 85±5°C.

The dicumyl peroxide (DCP) is put in a thermal cup which is placed in an oven at 80°C to melt and keep the DCP liquid. The liquid DCP is evenly sprayed on the dust-free wiper until the dust-free wiper is soaked.

After the liquid DCP soaks the dust-free wiper, the temperature of the silicone rubber heating wire is measured and adjusted in real time, and the temperature of the insulating layer is controlled to maintain at 85±5°C for 50 minutes.

The heating is stopped, and after the temperature drops to the room temperature, the silicone rubber heating wire and the dust-free wiper are removed in sequence.

The dust-free wiper soaked with alcohol is utilized to gently wipe and clean the surface impurities of the reaction stress cone, and a high-pressure air gun is utilized to blow the surface of the reaction stress cone to remove the surface impurities and possible remaining debris of the dust-free wiper.

The repairing insulation is manufactured by using extrusion molding. The extruded repairing insulation material is the same as the insulation material of the cable body. The repairing insulation material is cross-linked by using the routine method in the conventional technology. The temperature condition for the cross-linking reaction is 230°C and the nitrogen pressure is equal to 1.5 MPa.

After the manufacturing of the repairing insulation is completed, the insulating layer is cut and dissected, and dumbbell-shaped samples of specification 5A are cut out from three positions ①②③ shown in FIG. 2. The thickness of the sample is equal to 1 mm, and a test area of sample ③ is required to include the repairing interface.

An electronic universal testing machine is adopted to test the tensile strength and elongation at break of the three samples respectively. A tensile rate during the test process is equal to 250 mm/min. The test results are shown in Table 2.

Table 2 Mechanical properties of samples taken at different positions

| Sampling position | Sampling number | Tensile strength /MPa | Elongation at break /% |
|---|---|---|---|
| Body insulation | ① | 25.5Mpa | 556 |
| Repairing insulation | ② | 24.4Mpa | 576 |
| Repairing interface | ③ | 22.0 MPa | 543 |

Comparative example:

Repairing insulation of the flexible joint is trial-manufactured according to the specifications of 320kV DC submarine cable. In order to save the experimental period and cost, the processes of conductor welding and inner shielding repair are omitted. The 320kV cable is cut directly, the insulating outer shielding is cut off from the middle, the complete inner shielding and conductor wire core structure are retained, and the insulating layer is cut and polished into the shape of the reaction stress cone. The reaction stress cone is not subjected to the surface impregnation treatment described in the present application, and the extrusion molding method is directly utilized to manufacture the repairing insulation. The extruded repairing insulation material is the same as the insulation material of the cable body. The repairing insulation material is cross-linked by using the routine method in the conventional technology. The temperature condition of the cross-linking reaction is 230°C and the nitrogen pressure is equal to 1.5MPa.

After the manufacturing of the repairing insulation is completed, the insulating layer is cut and dissected, and dumbbell-shaped samples of specification 5A are cut out from three positions ①②③ shown in FIG. 2. The thickness of the sample is equal to 1 mm, and a test area of sample ③ is required to include the repairing interface.

An electronic universal testing machine is utilized to test the tensile strength and elongation at break of the three samples respectively. The tensile rate during the test process is equal to 250 mm/min. The test results are shown in Table 3.

Table 3 Mechanical properties of samples taken at different positions

| Sampling position | Sampling number | Tensile strength /MPa | elongation at break /% |
|---|---|---|---|
| Body insulation | ① | 26.8Mpa | 563 |
| Repairing insulation | ② | 23.4Mpa | 546 |
| Repairing interface | ③ | 18.7 MPa | 503 |

By comparing the test results in Table 2 and Table 3, it can be seen that the mechanical strength of the repairing insulation of the flexible joint is slightly lower than that of the body insulation. For the sample containing the repairing insulation interface, the mechanical tensile strength is further reduced, and the elongation at break is also significantly reduced. When the repairing interface is not reinforced by using the specific method of the present application, the mechanical strength at the repairing interface is only 70% of the mechanical strength of the cable body and only 80% of the mechanical strength of the repairing insulation, so that it is difficult to achieve the performance required for manufacturing the cable flexible joint. While using the method of the present application to process the repairing interface, the mechanical strength of the material at the repairing insulation interface is significantly improved, reaching 86% of the cable body insulation and 90% of the repairing insulation. Accordingly, if the surface of the reaction stress cone is processed with the method of the present application during the manufacturing of the flexible joint of the high-voltage submarine cable, the mechanical strength of the repairing interface of the flexible joint can be greatly improved and a success rate of the manufacturing of the flexible joint can be increased.

As shown in FIG. 7, in the embodiment II of the present invention, a liquid phase impregnation-based reinforcement device for a repair interface of a flexible joint of a high-voltage cable is provided, which specifically includes: an impregnation constant temperature heating device and a dust-free wiper tape.

The impregnation constant temperature heating device includes a non-contact temperature sensor 9, a universal adjustable fixed flexible rod 8, a digital display electric heating thermostat controller 7, and a silicone rubber heating wire 6.

A base of the fixed flexible rob is padded with a rubber and fixed on the outside of the cable.

The non-contact temperature sensor and a wire thereof are fixed on the universal adjustable fixed flexible rod 8.

The silicone rubber heating wire is configured to wrap around according to the steps mentioned above, and is connected to the digital display electric heating thermostat controller 7 through the wire. The digital display electric heating thermostat controller 7 is connected to the 220V power supply.

When in use, the lens of the non-contact temperature sensor is wiped clean, the non-contact temperature sensor is calibrated, and then the fixed flexible rod is adjusted so that the sensor is suspended at a proper distance away from and aligned with the heating area to be measured. The temperature of the thermostat controller is set, and the heating is started.

The non-contact temperature sensor provides a temperature feedback signal, which is displayed by the digital display electric heating thermostat controller. PID control is performed on the heating circuit to periodically switch on and off, to maintain the temperature of the measured area in the set temperature range.

It should be noted that the present application is based on the results of multiple tests on the insulation performance of the cross-linked polyethylene in the flexible joint of the high-voltage submarine cable. Through the tests, it is found that no matter what conventional technology is used, the mechanical strength of the material at the repairing insulation interface of the flexible joint is compromised to varying degrees. As shown in FIG. 2, anatomical tests are performed on multiple flexible joints that failed the type test. The mechanical strength of the testing material of the dumbbell-shaped sample is used. The average tensile strength of the body insulation sample at location ① is equal to 25.5 Mpa, the average tensile strength of the repairing insulation sample at location ② is equal to 24.4 MPa, and the average tensile strength of the insulation sample containing the repairing interface sampled at location ③ is only equal to 14.5 MPa.

As shown in FIG. 3, after analysis, the inventors first find that the reason for the above phenomenon is that the cable body insulation material has achieved sufficient cross-linking reaction in the cable cross-linked pipeline. Therefore, the cross-linking initiator (i.e., dicumyl peroxide (DCP)) in the material formula is exhausted. In the subsequent process of manufacturing the flexible joints, the repairing insulation material is not cross-linked during the extrusion or wrap molding process. In the subsequent cross-linking process of the repairing insulation material, the body insulation material and repairing insulation material need to reach a higher temperature, to fully fuse the materials, and meanwhile the DCP in the repairing insulation material is decomposed, in order to cause the cross-linking reaction. However, since the body insulation material is cross-linked and is a thermosetting material, even if it reaches the crystallization melting temperature, a molecular mobility of the body insulation material is still extremely limited, and it is impossible for the body insulation material to achieve a complete fusion with the repairing insulation material. The more important issue is that there is no more cross-linking initiator in the body insulation material to further participate in the cross-linking reaction. Therefore, even if the materials can be fused through the interpenetrating diffusion movements between macromolecules, the fusion is still very weak. If it is desired to achieve the full fusion of materials and achieve the sufficient mechanical strength, the materials at the repairing interface need to be cross-linked.

In order to implement the cross-linking of the materials at the repairing interface, the present application proposes to appropriately add a small amount of DCP into the superficial layer of the body insulation reaction stress cone structure to assist the fusion of material and to cross-link together with the repairing insulation material, so that not only the material at the interface achieves the molecular interpenetration with the repairing insulation material, but also chemical bonds between molecules are established. In such a manner, it is possible to ensure a high enough mechanical strength at the repairing interface. In the subsequent long-term work, the flexible joint may receive various forms of mechanical stresses, but no stress defects may occur inside the flexible joint. Meanwhile, it should be noted that the DCP introduced at the interface should not be excessive and a penetration depth should not be too large, otherwise it may cause excessive cross-linking of the insulation material of the cable body.

Compared to the conventional technology, the beneficial technical effects of the present application at least include the following aspects:

1. In terms of operation process, the present application has the advantages of simple operation process, lightweight equipment, low requirements for operating environment and construction situations, and is adapted to the manufacturing of both emergency repair flexible joint and factory flexible joint.

2. Class-1000 or class-100 dust-free wiper is utilized to avoid the debris residue of cloth material from the source. The dust-free wiper soaked with alcohol is further utilized to gently wipe and clean the surface impurities of the reaction stress cone, and a high-pressure air gun is utilized to blow the surface of the reaction stress cone, thereby avoiding the possibility of large-sized impurities and defects in the insulation material, and ensuring the electrical performance of the flexible joint.

3. The reasonable width and wrapping thickness of the dust-free wiper are designed to ensure a simple and convenient operation, meanwhile, the surface density of the dust-free wiper is relatively dense, which also allows the liquid DCP to have a better impregnation property after the spraying, and the liquid DCP can evenly and fully impregnate and diffuse into the cross-linked polyethylene material on the surface of the reaction stress cone.

4. The surface of the reaction stress cone is heated by winding the silicone rubber heating wire, which has the advantages of fast heating rate, high working temperature, easy portability, and low cost. More importantly, the silicone rubber insulation material has good compatibility with DCP at a high temperature. The DCP may not affect the silicone rubber, and the silicone rubber may not cause chemical reactions in DCP, thereby avoiding the loss of DCP active molecules. Meanwhile, the heating is performed from the surface of the reaction stress cone. There may exist a loss when the heat is transferred to the inside of the insulating layer, and the high temperature is only maintained on the surface of the reaction stress cone, which avoids excessive penetration depth of the DCP and prevents the over-cross-linking of the insulation material of the cable body caused by the excessive DCP content.

5. The surface temperature of the reaction stress cone is strictly controlled in the range of 70 to 90°C, which enhances the molecular movement of the cross-linked polyethylene material when heated, while maintaining the temperature required for melting the DCP, keeping the DCP in a constant liquid state, and promoting the liquid DCP molecules to impregnate and diffuse into the cross-linked polyethylene material of the surface of the reaction stress cone. Meanwhile, at this temperature, the half-life of DCP decomposition is about 8 to 150 days. Even at a high temperature of 90°C, the half-life of DCP is 8 days. The temperature range designed in the present application not only can ensure that DCP remains in the liquid state, and rapidly impregnates and diffuses to the cross-linked polyethylene superficial layer of the reaction stress cone, but also ensure that the DCP may not decompose and be exhausted at this temperature.

The technical features in the above-described embodiments can be combined in any way. To simplify the description, all possible combinations of the technical features in the above-described embodiments are not described. However, as long as there is no contradiction in the combination of these technical features, all should be considered to be within the scope of the present application.

The above-described embodiments only express several implementation modes of the present application, and the descriptions are relatively specific and detailed, but they should not be construed as limiting the scope of the patent application. It should be noted that, those of ordinary skill in the art can make several modifications and improvements without departing from the concept of the present application, and these all fall within the protection scope of the present application. Therefore, the protection scope of the present application should be subject to the appended claims.

**Claims**

1. A liquid phase impregnation-based reinforcement method for a repair interface of a flexible joint of a high-voltage cable, comprising:

    step 1, forming a surface of a reaction stress cone;
    step 2, wrapping the surface of the reaction stress cone with a dust-free wiper, heating an outside of the dust-free wiper, and processing the surface of the reaction stress cone with a liquid phase impregnation method;
    step 3, preheating the joint, extruding or wrapping a cross-linked polyethylene repairing insulation material, and cross-linking the repairing insulation material in a preset temperature range and a preset pressure range; and
    step 4, polishing a surface of the repairing insulation material to manufacture the stress cone, and repairing an outer shielding layer.

2. The method according to claim 1, wherein the step 2 further comprises:

    step 2.1, wrapping around surfaces of reaction stress cones on both sides of the flexible joint with a dust-free wiper tape;
    step 2.2, wrapping around a surface of the wrapped dust-free wiper tape with a heating wire;
    step 2.3, starting a heating function of the heating wire, measuring a temperature of the heating wire in real time, controlling a heating power of the heating wire to maintain the temperature of the heating wire in a set temperature range;
    step 2.4, spraying liquid dicumyl peroxide (DCP) evenly on the dust-free wiper until the dust-free wiper is soaked;
    step 2.5, measuring and adjusting a heating temperature in real time, a heating duration being less than one-third of a DCP half-life, to allow liquid DCP molecules to gradually impregnate and diffuse from the dust-free wiper into a cross-linked polyethylene (XLPE) material of the surface of the reaction stress cone;
    step 2.6, removing the heating wire and the dust-free wiper; and
    step 2.7, cleaning surface impurities of the reaction stress cone.

3. The method according to claim 2, wherein in the step 2.1, a polyester fiber dust-free wiper is adopted to manufacture a wrapping tape material, a class of the dust-free wiper is class 100 or class 1000, a thickness of the dust-free wiper tape ranges from 0.2 to 2 mm, and a width of the dust-free wiper tape ranges from 20 to 50 mm.

4. The method according to claim 2 or 3, wherein in the step 2.2, the heating wire is a silicone rubber heating wire having a white insulation or colorless insulation material.

5. The method according to claim 4, wherein the step 2.3 further comprises:
   measuring, by a non-contact temperature sensor, the temperature of the silicone rubber heating wire in real time, and controlling the heating power of the heating wire to maintain the temperature of the heating wire in a range of 70 to 90 °C.

6. The method according to claim 2 or 3, wherein the step 2.5 further comprises:
   controlling the temperature of the insulation layer to be maintained at 70 to 90°C for 30 to 60 minutes.

7. The method according to claim 2 or 3, wherein the step 2.6 further comprises:
   stopping the heating of the heating wire, removing the heating wire and the dust-free wiper in sequence after the temperature drops to a room temperature.

8. The method according to claim 7, wherein the step 2.7 further comprises:
wiping and cleaning surface impurities of the reaction stress cone with the dust-free wiper soaked with alcohol, and blowing, by a high-pressure air gun, the surface of the reaction stress cone to remove the surface impurities and possible remaining debris of the dust-free wiper.

9. The method according to any one of claims 1 to 3, wherein the step 3 further comprises:
controlling a preheating temperature in a range of 100°C to 115°C, wherein a maximum temperature at the surface of the reaction stress cone does not exceed 120°C.

10. A liquid phase impregnation-based reinforcement device for a repair interface of a flexible joint of a high-voltage cable, applied to implement the liquid phase impregnation-based reinforcement device for the repair interface of the flexible joint of the high-voltage cable according to any one of claims 1 to 9, the device comprising an impregnation constant temperature heating device and a dust-free wiper tape; wherein
the impregnation constant temperature heating device comprises a non-contact temperature sensor (9), a universal adjustable fixed flexible rod (8), a digital display electric heating thermostat controller (7), and a silicone rubber heating wire (6); a base of the fixed flexible rob is padded with a rubber and fixed on an outside of the cable; the non-contact temperature sensor and a wire thereof are fixed on the universal adjustable fixed flexible rod (8); the silicone rubber heating wire (6) is connected to the digital display electric heating thermostat controller (7) through the wire, the digital display electric heating thermostat controller (7) is connected to a 220V power supply.

FIG. 1

FIG. 2

FIG. 3

FIG. 4

FIG. 5

FIG. 6

FIG. 7

a surface of a reaction stress cone is formed

↓

the surface of the reaction stress cone is wrapped with a dust-free wiper, an outside of the dust-free wiper is heated, and the surface of the reaction stress cone is processed with a liquid phase impregnation method

↓

the joint is preheated, the cross-linked polyethylene repairing insulation material is extruded or wrapped, and the repairing insulation material is cross-linked in a preset temperature range and a preset pressure range

↓

a surface of the repairing insulation material is polished to manufacture the stress cone, and an outer shielding layer is repaired

FIG. 8

<table>
<tr><td colspan="2" align="center">**INTERNATIONAL SEARCH REPORT**</td><td>International application No.<br>**PCT/CN2022/136800**</td></tr>
</table>

**A. CLASSIFICATION OF SUBJECT MATTER**

H02G15/08(2006.01)i;H02G1/16(2006.01)i

According to International Patent Classification (IPC) or to both national classification and IPC

**B. FIELDS SEARCHED**

Minimum documentation searched (classification system followed by classification symbols)

IPC: H02G

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 南方电网科学研究院, 接头, 附件, 界面, 交界, 修复, 恢复, 增强, 补强, 交联, 应力锥, 布, 纸, 浸, 喷, 淋, 涂, 抹, 洒, 液体, 溶液, 加热, 电热, 聚乙烯, 屏蔽层, 过氧化二异丙苯, DCP, cable, joint, interface, surface, repair, reinforce, stress cone, liquid, impregnate, crosslink, heat, shield

**C. DOCUMENTS CONSIDERED TO BE RELEVANT**

| Category* | Citation of document, with indication, where appropriate, of the relevant passages | Relevant to claim No. |
|---|---|---|
| PX | CN 115065025 A (ELECTRIC POWER RESEARCH INSTITUTE, CHINA SOUTHERN POWER GRID et al.) 16 September 2022 (2022-09-16)<br>claims 1-11, description, paragraphs [0062]-[0133], and figures 1-8 | 1-10 |
| Y | CN 106374397 A (CHONGQING LBZB CABLE CO., LTD.) 01 February 2017 (2017-02-01)<br>description, paragraphs [0002]-[0024], and figures 1-3 | 1-10 |
| Y | CN 113746035 A (HARBIN UNIVERSITY OF SCIENCE AND TECHNOLOGY) 03 December 2021 (2021-12-03)<br>description, paragraphs [0002]-[0050], and figures 1-3 | 1-10 |
| A | CN 108879496 A (ELECTRIC POWER RESEARCH INSTITUTE OF GUANGXI POWER GRID CO., LTD.) 23 November 2018 (2018-11-23)<br>description, paragraphs [0002]-[0043], and figures 1-3 | 1-10 |
| A | CN 106505489 A (ZHOUSHAN ELECTRIC POWER SUPPLY COMPANY OF STATE GRID ZHEJIANG ELECTRIC POWER COMPANY et al.) 15 March 2017 (2017-03-15)<br>description, paragraphs [0027]-[0034], and figures 1-4 | 1-10 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 February 2023** | **28 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2022/136800** |

**C.     DOCUMENTS CONSIDERED TO BE RELEVANT**

| Category* | Citation of document, with indication, where appropriate, of the relevant passages | Relevant to claim No. |
|---|---|---|
| A | CN 206272207 U (YICHANG XIN TONG CABLE CO., LTD.) 20 June 2017 (2017-06-20) description, paragraphs [0045]-[0073], and figures 1-4 | 1-10 |

Form PCT/ISA/210 (second sheet) (July 2022)

INTERNATIONAL SEARCH REPORT
Information on patent family members

International application No.

**PCT/CN2022/136800**

| Patent document cited in search report | | | Publication date (day/month/year) | Patent family member(s) | | | Publication date (day/month/year) |
|---|---|---|---|---|---|---|---|
| CN | 115065025 | A | 16 September 2022 | None | | | |
| CN | 106374397 | A | 01 February 2017 | None | | | |
| CN | 113746035 | A | 03 December 2021 | None | | | |
| CN | 108879496 | A | 23 November 2018 | None | | | |
| CN | 106505489 | A | 15 March 2017 | CN | 106505489 | B | 30 October 2018 |
| CN | 206272207 | U | 20 June 2017 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210545330